# EUROPEAN PATENT APPLICATION

(11) **EP 2 133 832 A1**
(43) Date of publication of application: **16.12.2009**
(21) Application number: 08405152.3
(22) Date of filing: 09.06.2008
(51) Int. Cl.: G06Q 10/00

(54) **Transactional database system**

(71) Applicant: E-Mediat AG, 3322 Schönbühl (CH)
(72) Inventor: Cichocki, Marek, 3073 Gümligen (CH); Schaefer, Ulrich, 3006 Bern (CH)
(74) Representative: Frei Patent Attorneys

(57) **Abstract**

Data repositories (11, 12, 13) are configured to execute transfer transactions (6a) invoked by a client (1, 2, 3) and specifying a unique identifier (411, UIN) of a transferred entity (5) and a receiving transfer partner identifier (R_ID, 412). From this, a second data repository identifier (RDR_ID) associated with the transfer partner (22) is determined, and this second data repository identifier (RDR_ID) is stored, together with the unique identifier (UID) of the transferred entity (5) and the receiving transfer partner identifier (R_ID), in a persistent computer storage (14). Furthermore, the first data repository (11) invokes, at the second data repository (12), a transfer message transaction (6c), transmitting to the second data repository (12), the unique identifier (UIN) of the transferred entity (5), a sending transfer partner identifier (S_ID) uniquely identifying the transfer partner (21) sending the transferred entity (5). Optionally, further information (ExtD) associated with the transferred entity (5) identified by the unique identifier (UIN) of the first transfer data and previously stored in the first data repository (11) is also transmitted to the second data repository (12).

## Description

### FIELD OF THE INVENTION

The invention relates to a transactional database system and a method for operating a data processing system for tracking the path of goods through a supply chain, in particular as described in the preamble of the corresponding independent claims.

### BACKGROUND OF THE INVENTION

Commercial shipping operators are known to track the progress of shipments through the various carriers used, such as planes, trains, trucks, etc., and any intermediate storage locations, by means of computerised tracking systems. In such a tracking system, the shipping operator controls all the data that is recorded as the shipment progresses along its path, and may extract any information required to reconstruct the entire path or to locate a particular item. Typically, such a system is based on a transactional database system. As is commonly known, a transactional database system is one that implements database operations fulfilling the ACID criteria (Atomicity, Consistency, Isolation, Durability).

In certain settings, such a monolithic system is not applicable: there is a need for tracking certain goods, e.g. pharmaceutical drugs, as they are forwarded from the manufacturer to the consumer by various intermediaries. However, the participants in this process are reluctant to disclose their data to other parties. It is therefore not possible to collect tracking information from all participants in a monolithic system.

### DESCRIPTION OF THE INVENTION

It is therefore an object of the invention to create a transactional database system and a method for operating a data processing system of the type mentioned initially, which allows to collect tracking information representing the transfer of goods without automatically disclosing all information that is related to one participant to other participants or to a third party. Another object of the invention is to provide a transactional database system which allows to extract complete tracking information from along an item's path of shipment. A further object of the invention is to provide a transactional database system which allows to extract complete tracking information in a changing environment in which the participants change, from time to time, the data repositories they use to collect tracking information.

These objects are achieved by a transactional database system and a method for operating a data processing system according to the independent claims.

Thus, in the inventive transactional database system, a set of logically separated, computer based data repositories is implemented, each of the data repositories providing, to one another and to client processes, the same set of core transactions for recording the physical transfer of items, for storing recorded information and providing it to a data collection process at a later time. Each data repository, by means of an access control mechanism, is accessible through transactions only to a predefined subset of the client processes, and not to other client processes. Similarly, each data repository, by means of an access control mechanism, is accessible through further transactions to at least one of the other data repositories. The data repositories are configured to execute transfer transactions invoked by a client and specifying a unique identifier of a transferred entity and a receiving transfer partner identifier. From this, a second data repository identifier associated with the transfer partner is determined, and this second data repository identifier is stored, together with the unique identifier of a transferred entity and the receiving transfer partner identifier, in persistent computer storage. Furthermore, the first data repository invokes, at the second data repository, a transfer message transaction, transmitting to the second data repository, the unique identifier of the transferred entity, and a sending transfer partner identifier uniquely identifying the transfer partner sending the transferred entity. Optionally, further information associated with the transferred entity identified by the unique identifier of the first transfer data and previously stored in the first data repository is also transmitted to the second data repository.

This information allows the second data repository to record the sending entity and further information associated with a particular unique identifier of a transferred entity, and also an identifier of the database repository associated with the sending entity. In a preferred embodiment of the invention, when the second data repository is informed - via a corresponding transaction - that an item with a particular unique identifier has been received, it checks the recorded information to find the data set associated with this unique identifier.

This process of recording the sending and receipt of items is repeated for the entities of the supply chain that transfer the items further. As a result, the path or trajectory of the items is mirrored by the data records in the separate data repositories associated with the entities of the supply chain. However, no member of the supply chain has information about transfers except those in which it is itself involved. Only a further entity such as a regulatory body, or a trusted third party, may obtain authorisation to access all the separate data repositories or a limited subset of the information stored therein. This entity may initiate a data collection process which recursively follows the data records in the separate data repositories, stepwise reconstructing the path of the item.

Since the data records collected comprise not only the unique identifiers of the transfer partners, but also unique identifiers of the data repositories used by the transfer partners, the path can be retraced even when the receiving transfer partners change their data repositories. As long as a data repository, although it is inactive or retired in that it is no longer used to record fresh transfers, is kept available, the entirety of data in the distributed active and retired repositories comprises a consistent set of distributed records defining the trajectories of all items monitored by the system. The data remains consistent without requiring any changes to the data records which otherwise would be necessary to reflect changing data repositories.

The data repositories all operate in essentially the same manner, so transfers between transfer partners are not limited to a predetermined sequence or topology. Any transfer partner may, in principle, record a transfer to or from any other transfer partner. Setting up and extending the system is simple, since each transfer partner runs a copy of the same software. When adding a transfer partner,
- an associated data repository is set up, running this software, and
- a first global database is extended by an entry linking the name of the transfer partner to a unique identifier of the data repository, and
- a second global database is extended by an entry linking the unique identifier of the data repository to itsa network address such as a URL.

When items are returned, essentially the same methods as for recording a transfer in the direction to the consumer are preferably used. In one preferred embodiment of the invention, in order to distinguish transfers of the same item in the two directions (to consumer, or returned), an additional flag indicating the direction is included in the transaction, or a special type of return transaction is invoked, which is in most parts functionally identical to the transfer transaction, but causes, inside the data repository, the records related to the returned item to be marked accordingly. In another preferred embodiment of the invention, no dedicated return transactions exist, and time stamps created when recording the receipt or the sending of an item are be compared in order to determine which receipt record belongs to a particular send record (or vice versa).

The invention is preferably applied to the tracking of pharmaceutical goods such as prescription drugs from manufacturer through wholesale distributors to individual pharmacies or doctors, where it is desirable to be able to track either a particular batch of drugs from manufacturing to the consumer, or (vice versa) to determine the origin and history of an individual sales unit. The invention is of course also applicable to the tracking of other than pharmaceutical goods, e.g. hazardous materials or chemicals for which complete tracking may be desired for regulatory or safety-related reasons. At the same time, it is not necessary to maintain a single database recording all transfers.

A computer program for implementing the transactional database system according to the invention is loadable into an internal memory of a digital computer, and comprises computer program code means to make, when said computer program code means is loaded in the computer, the computer execute the method of operating a data repository according to the invention. In a preferred embodiment of the invention, a computer program product comprises a computer readable medium, having the computer program code means recorded thereon.

Further preferred embodiments are evident from the dependent patent claims. Features of the method claims may be combined with features of the system claims and vice versa.

### BRIEF DESCRIPTION OF THE DRAWINGS

The subject matter of the invention will be explained in more detail in the following text with reference to preferred exemplary embodiments which are illustrated in the attached drawings, in which:
- Figure 1: schematically shows a structure of co-operating data repositories and associated entities;
- Figure 2: schematically shows an internal structure of a data repository; and
- Figure 3: schematically shows a group data set associating a group identifier with a set of item identifiers.

In principle, identical parts are provided with the same reference symbols in the figures.

### DETAILED DESCRIPTION OF PREFERRED EMBODIMENTS

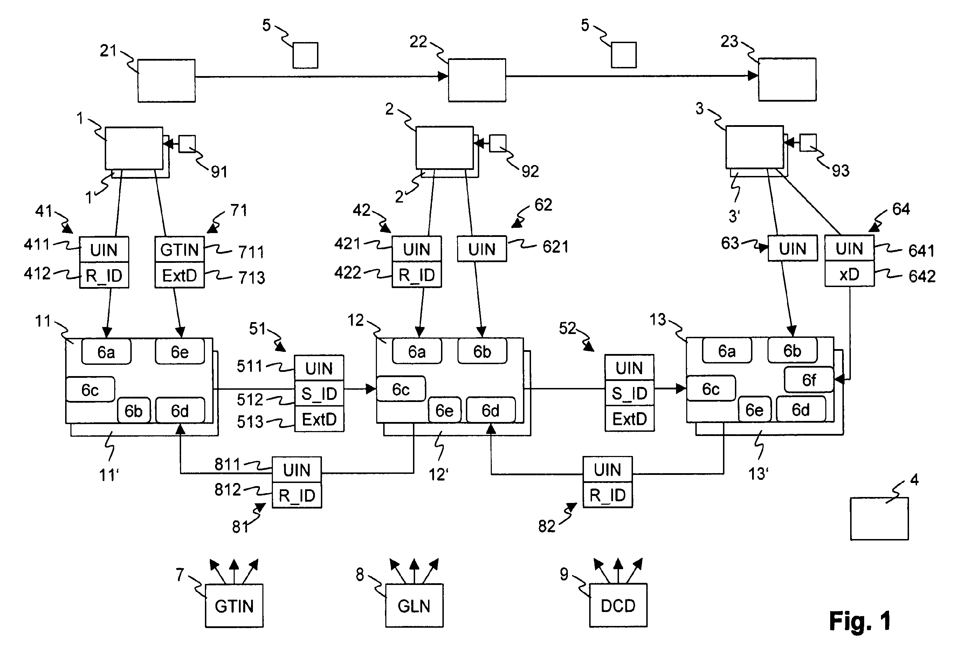

**Figure 1** schematically shows the structure of a transactional system for tracking the path of physical items 5 or goods transferred between transfer partners 21, 22, 23. The transfer partners are storage locations or organisational entities such as a manufacturer, a wholesale retailer or a sales outlet. The main entities involved in the operation of the transactional system shown are: data repositories 11, 11', 12, 12', 13, 13' implementing transactional databases and clients 1, 1', 2, 2', 3, 3' accessing these data repositories. A client is arranged to record an item 5, or a group of items 5 leaving or entering a transfer partner's responsibility. This happens for example when the item is handed over to a forwarding company. A client may be a stand-alone computer program or a web client running on a client computer in communication with at least one associated data repository. It may optionally be equipped with a data scanner 91, 92, 93 for optically scanning printed labels or for RF (radio frequency) identification of RFID tags. Alternatively or additionally, a client may also interface to an ERP system of a transfer partner. The ERP system is then configured to invoke the client to record items 5 leaving or entering the transfer partner's responsibility. **Figure 1** shows, for the purpose of explanation, only a linear flow of items 5 through the transfer partners 21, 22, 23, recorded in clients 1, 2, 3 and data repositories 11, 12, 13. The invention, however, also can record and represent the flow of goods through an arbitrary sequence withing network, including a flow in the opposite direction, corresponding to returned goods 5. For this reason, further clients 1', 2', 3' data repositories 11', 12', 13' are shown, and it is understood that a flow of an item 5 may be registered, e.g., at client 1, then client 3', then client 2 etc.

The data repositories 11, 11', 12, 12', 13, 13' are logically separated in that they appear as distinct computers, with separate data storage areas hidden from the other repositories and accessible through separate access control mechanisms. Typically, they are also physically separated, i.e. placed at different geographical locations. The clients 1, 1', 2, 2', 3, 3' and data repositories 11, 11', 12, 12', 13, 13' are linked by a communication network, e.g. a TCP/IP network such as the internet or an intranet. Even if, in principle, any client may communicate with any data repository, the invocation of transactions 6a, 6b, 6c, 6d at each data repository is controlled by an authorisation mechanism, such that a particular data repository will only grant access, depending on the type of transaction, to predetermined clients and predetermined other data repositories. Typically, each client 1, 1', 2, 2', 3, 3' will be associated with one particular data repository 11, 11', 12, 12', 13, 13'. Alternatively, a group of clients may share the sama data repository. This latter case is suitable for an organisation having a plurality of sales outlets, whose transfers are recorded in a common data repository controlled by the organisation.

Access control and encryption of the data transfer between the participants of the system (i.e. clients and data repositories and common databases) is done by commonly known authentication methods, such as e.g. certificates, public key cryptosystems, etc.

Common data used, at least occasionally, by all the data repositories 11, 11', 12, 12', 13, 13' is maintained in
- a **global identification number database** 7, which maintains a list of unique product prefix identifiers (GTIN, global trade item number), each being associated with a particular product. For example, a particular prescription drug such as Ritalin®, Mustargen® , Adriamycin®, Aspirin®, in a particular form and package, will be associated with a unique GTIN. This database is mainly required by the data repository 11, 11', 12, 12', 13, 13' associated with a producer of items, in order to retrieve or register a GTIN that is used for a new item entering the system by being produced;
- a **global location address** (GLN) **database** 8 associating the unique name of a transfer partner 21, 22, 23, henceforth called **transfer partner identifier,** with a data repository identifier uniquely identifying a data repository 11, 11', 12, 12', 13, 13' chosen by the transfer partner 21, 22, 23; and
- a **data centre** (DCD) **database** 9 associating each data repository identifier with a network address such as a URL (uniform resource locator) for establishing a communication link with the data repository through the network. This database can, in principle, be combined with the global location address (GLN) database 8, it is however advantageous to keep the network related information represented by the data centre (DCD) database separate from the higher level information represented in the global location address (GLN) database.

These databases 7, 8, 9 are preferably stored at a central location accessible to all the data repositories. In order to improve performance, the databases are preferably mirrored at the individual data repositories and updated e.g. each night.

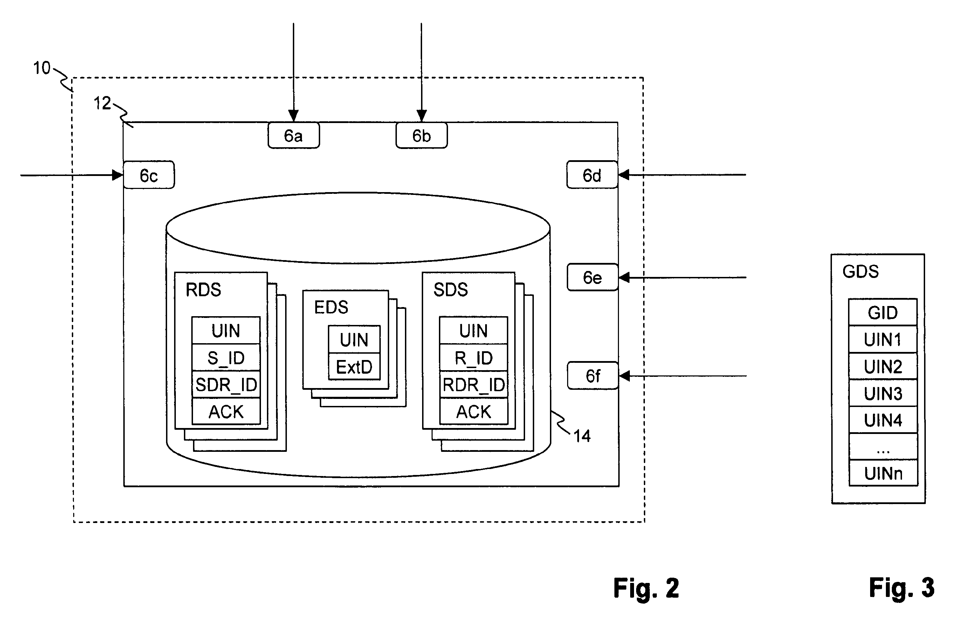

**Figure 2** schematically shows the structure of a single data repository 12, implemented in a computer server or **data centre** 10 and providing the transactional interfaces 6a, 6b, 6c, 6d defined above. The data repository 12 comprises a persistent storage unit 14 for the long time storage of data. This may be implemented with harddisks or other non-volatile mass storage media, including backup schemes (invisible to the outside user) for maintaining the integrity of the data over months and years. The persistent storage stores the sender and recipient data sets SDS, RDS and the extended data sets EDS, and bookkeeping information such as time stamps, identity of the client invoking the transaction, product name, data regarding a final recipient of the transferred entity 5 when it leaves the last transfer partner, cross references, information on groups of items (group identifier and associated UIDs), and other status information.

All the data repositories 11, 11', 12, 12', 13, 13' are, in principle, identical in their manner of operation, running copies of the same software. Selected data repositories 11, 11', 13, 13' may comprise dedicated software mechanisms for recording newly produced items 5 or for recording when items 5 leave the system and are no longer tracked. When a new transfer partner 21, 22, 23 is to be included in the tracking system,
- a new data repository is configured;
- a corresponding new data repository identifier and associated transfer partner identifier are recorded in the global location address (GLN) database;
- a corresponding entry associating the associated transfer partner identifier with the address of the data repository are recorded in the data centre (DCD) database.
The changes in the global databases are propagated to the clients 1, 1', 2, 2', 3, 3'.

The operation of the system is explained by way of the following example: When a new item is to be recorded in the system in order to allow for its tracking, a client 1 associated with e.g. the manufacturer invokes an initialisation transaction 6e, providing to its data repository initialisation data 71 comprising a unique identifier of an entity type GTIN, 711 and further information ExtD, 713 associated with said entity type 5, for example, a lot number and/or an expiration date. Alternatively, the entity type may be identified by a brand name and packaging characteristics, from which the GTIN is determined by a database lookup. In both cases, the complementary information is determined from the global identification number (GTIN) database 7 (or from a mirrored copy of the GTIN database).

The UIN is unique for every single item 5. This is in contrast to the commonly known global trade item number (GTIN), formerly known as EAN code, which is unique only for a particular type of item or product. The UIN is preferably generated from the GTIN of a given product by appending additional digits. For example, all packages of a 30-tablet pack of Aspirin® Effervescent Tablets share the same GTIN, whereas each package will be assigned a unique UIN.

The initialisation transaction 6e, after determining the UIN from the GTIN, processes the initialisation data 71 by storing, in an extended data set EDS in the persistent storage unit 14 of the data repository 11,
- said unique identifier of the transferred entity UIN, and
- the further information ExtD.

In a preferred embodiment of the invention, the initialisation also involves the step of automatically generating a machine-readable label or tag comprising at least the UIN and optionally also part of or all the further information. The label or tag is printed or programmed, preferably at the location of the client 1, and is automatically or manually attached to the item 5.

In a further preferred embodiment of the invention, the initialisation procedure also allows the client 1 to define a collection or a group of items 5, assigning a unique group identifier GID to a set of UIDs. Such a collection may be, e.g. 12 items of the same product type in common container. In another preferred embodiment of the invention, arbitrary items may be grouped in a single container and their UIDs be associated with a group identifier GID. In both cases, preferably a package label or tag comprising this group identifier in machine-readable form is generated automatically. This package label or tag is then automatically or manually attached to the container containing the group of items 5 with the set of UIDs. This process may be applied recursively to label and manage containers comprising further containers of items 5.

Later on, when the package is sent or received, a transfer or receipt transaction 6a, 6b is invoked with the group identifier GID, and the associated set of UIDs and further information is sent forwarded or stored along with the group identifier, e.g. as if each individual item 5 of the group had been sent or received individually. For example, a data repository will process, in a receipt transaction 6b, a group identifier GID instead of a unique identifier of a transferred entity,
- to retrieve the associated unique identifiers of transferred entities UIN1, UIN2, UIN3, ..., UINn,
- to retrieve associated recipient data sets RDS,
- to register, in these recipient data sets RDS, the transferred entities 5 as having been received ACK, and,
- optionally, to invoke at the sending data repository 11 a receipt acknowledgement transaction 6d specifying the group identifier GID or the associated unique identifiers of the transferred entities UIN 1, UIN2, UIN3, ....

**Figure 3** schematically shows a group data set GDS comprising a group identifier GID and its associated unique identifiers of transferred entities UIN1, UIN2, UIN3, ... UINn.

In the example, the UIN is shown as being generated, from the GTIN, in the data repository 11, it may however by just as well be generated by the client 1. In both cases, the UIN is associated, in the data repository 11, with the further information ExtD. The further information ExtD typically comprises lot number, date of expiry, brand name and the like.

The steps of generating and assigning a UIN and attaching a tag or label to a package, and recording a transfer is preferably accomplished in a single sequence of user interactions, or of interactions with an ERP.

For example, in a procedure for initialising the package data and recording a transfer, the client performs the following steps (wherein a user prompt implies that the user then enters the required data):
1. User login, which defines the user identity and the identity of the transfer partner (in this case, a manufacturer).
2. Prompt the user for a GTID (or EAN) code number. This defines the product type (brand name, package type, dosage).
3. Prompt the user for batch number, expiry date, label type (i.e. bar code type), and the number of UIDs to generate.
4. Allow the user to select the creation of a package containing multiple products.
5. Invoke the initialisation transaction 6e.
6. Generate and print labels for each product and optionally for the package, if selected.
7. Prompt the user to indicate when all products and optionally the package have been labelled and ready to be sent.
8. (only when also sending the products/package): prompt the user to enter the name of the receiving transfer partner.
9. Prompt the user to confirm that the products/package/container are sent.
10. Invoke the transfer transaction 6a.

Steps 2 through 6 may be repeated for different products and packages, and an additional step may be added after step 6 for defining a container comprising several packages and/or items and printing a label for this container.

The clients are preferably implemented with a web-based interface, and the user interaction may in this manner be controlled by the corresponding data repository.

Alternatively, the UIN may be generated and an item 5 or a package containing a group of items 5 may be labelled and stored, with the step of recording the transfer to another transfer partner 22 being done at a later time. In the latter case, when sending the item 5, the label is preferably scanned or read by a code scanner 91, and the transfer transaction 6a is invoked with this UID and the receiving transfer partner identifier R_ID.

In this case, the procedure for sending an item 5 is similar to that performed by a transfer partner later in the supply chain, comprising the steps of:
1. Prompt the user for a recipient (e.g. by selection from a list of transfer partners).
2. Prompt the user for the UIN.
3. Optionally allow for the registration of further UINs and the definition of a container, printing a container label.
4. Prompt the user to confirm that the products/ container are sent.
5. Invoke the transfer transaction 6a.

When recording a transfer of the item 5 from the first transfer partner 21 to the second transfer partner 22, the client 1 invokes, at its associated data repository 11 a transfer transaction 6a processing first transfer data 41 provided by the client process 1, wherein the first transfer data 41 comprises the unique identifier of the transferred entity UIN, 411, and a receiving transfer partner identifier R_ID, 412 uniquely identifying the transfer partner 22 receiving the transferred item 5. This transfer partner 22 is the one to which the item 5 is to be transferred or to which transfer has begun.

The data repository 11 determines, from the from the receiving transfer partner identifier R_ID, 412, a receiving data repository identifier or second data repository identifier RDR_ID associated with the transfer partner 22 and stores, in a persistent storage unit 14 of the first data repository 11, a sender data set SDS comprising
- the unique identifier of the transferred entity UIN,
- the receiving transfer partner identifier R_ID and
- the second data repository identifier RDR_ID,

This amounts to storing information linking the transfer of an item 5 with both the receiving transfer partner, and also with the receiving transfer partner's database, which may be used for later retrieval for tracking the item.

The step of determining the second data repository identifier associated with the transfer partner 22, is preferably accomplished by matching the given receiving transfer partner identifier 412 with an entry in global location address GLN database 8. Likewise, in a preferred embodiment of the invention, given the data repository identifier, the corresponding network address for communicating with the second data repository 12 is retrieved from the data centre (DCD) database 9.

Furthermore, the data repository 11 sends information about the item 5 being transferred directly to the second data repository 12. This is preferably done by invoking a transfer message transaction 6c provided by the second data repository 12 and allowing for the transmitting, to the second data repository 12, of a transfer message transaction 6c for processing in the second data repository second transfer data 51 comprising
- said unique identifier of the transferred entity UIN, 511,
- a sending transfer partner identifier S_ID, 512 uniquely identifying the transfer partner 21 sending the transferred entity 5, and
- optionally, the further information ExtD, 513 associated with the transferred entity 5 identified by the unique identifier UIN, 511.

In other preferred embodiments of the invention, the further information ExtD is not sent along with the UIN. The further information ExtD, if it is included in machine readable form on the label or tag, may then be read by the code scanner 91, 92, 93 and input to a data repository 11, 11', 12, 12', 13, 13' when the corresponding client 1, 1', 2, 2', 3, 3' registers the receipt of the item 5. In the case when the further information ExtD is not automatically transmitted along with the transfer message transactions 6c, in a further preferred embodiment of the invention, a data repository 11, 11', 12, 12', 13, 13' may invoke a information query transaction at a transfer partner's data repository, giving the UID and asking for all or part of the further data ExtD. If the querying data repository is authorised to receive this data, the data is transmitted to the querying data repository. If the the data repository being queried does itself not comprise the required further data, it may recursively query the data center of the transfer partner from whom it received the item; and so on all the way back to the originator of the item 5.

In a preferred embodiment of the invention, the receiving data repository, when processing a transfer message transaction 6c called by a sending data repository 11, 11', 12, 12', 13, 13', stores, in its persistent storage unit 14, a recipient data set RDS comprising
- the unique identifier of the transferred entity UIN,
- the sending transfer partner identifier S_ID, and
- a sending data repository identifier SDR_ID associated with the sending transfer partner,
and optionally, stores the further information ExtD associated with the unique identifier of the transferred entity UIN. The sending data repository identifier SDR_ID is either sent along explicitly as part of the transaction invoked by the sending data repository 11, or extracted from the information interchange when establishing the communication link underlying the execution of the transaction.

This amounts to storing information linking the expected receipt of an item 5 with both the sending transfer partner, and also with the sending transfer partner's database, which may be used for later retrieval for tracking the item. The validity of the receipt still has to be established. This is done when a client 2 representing the second transfer partner 22 registers an incoming item 5. The item's unique identifier UIN is recorded, e.g. manually or by a code scanner 92 and a receipt transaction 6b is called by the client 2, transferring the UIN, 621 as part of receipt data 62 to the second data repository 12.

Based on this UIN, the second data repository 12 performs the steps of
■ determining, from the unique identifier of the received entity UIN, 621 and from recipient data sets RDS stored in the data repository 12, one recipient data set RDS whose unique identifier UIN of the transferred entity matches that UIN, 621 of the receipt data 62. If no such RDS exists, the incoming item 5 is not expected at the second transfer partner, and a corresponding error is registered, e.g. in a log file and/or by alerting a user.
■ registering, in said one recipient data set RDS, the transferred entity 5 as having been received. This is done by setting a flag ACK of the RDS to represent the status "received".

Optionally, and only if the above match is successful, the second data repository 12 may communicate the receipt back to the sending data repository 11. This data repository is identified by the sending data repository identifier SDR_ID stored in the matching recipient data set RDS. The second data repository 12 invokes, at the sending data repository 11, a receipt acknowledgement transaction 6d for processing receipt acknowledgement data 81 comprising
■ the unique identifier of the transferred entity UIN, 811,
■ the receiving transfer partner identifier R_ID, 812 uniquely identifying the transfer partner 22 having received the transferred entity 5.

When processing this receipt acknowledgement transaction 6d, the sending data repository 11
- determines the sender data set SDS whose unique identifier of the transferred entity UIN matches the unique identifier of the transferred entity UIN, 811 specified by the receipt acknowledgement transaction 6d, and
- marks, in the sender data set SDS, the transferred entity as having been received by setting a flag ACK of the SDS to represent the status "received".

Optionally, the sending data repository 11 may check whether the second data repository identifier RDR_ID stored in this sender data set SDS is identical to the receiving transfer partner identifier R_ID, 812 specified in the receipt acknowledgement transaction 6d, and, set the flag ACK to "received" only if this check succeeds. Otherwise, error is registered, e.g. in a log file and/or by alerting a user.

The sender data set SDS and the recipient data set RDS comprising the information as described above allow, at a later time, to retrace the path of the item 5 through the chain of data repositories 11, 11', 12, 12', 13, 13'. Since not only the receiving transfer partner identifier R_ID but also the second data repository identifier RDR_ID is stored, the path can be retraced even when the receiving transfer partner 22 changes its active data centre 10 and its data repository 12. An active data repository is one that records ongoing transfers by processing transfer transactions 6a, 6b, 6c, 6d. A data repository may be switched from the active state to a retired state, wherein it does not record any new transfers, with the role of the active data repository being taken over by a new data repository.

When a data repository is retired from use by recording transfers, it keeps its data repository identifier, and the associated entry in the data centre DCD database 9 remains valid. The global location address GLN database 8 is updated to identify the new data repository chosen by the transfer partner. In this manner, the chain of information represented by the sender and recipient data set SDS, RDS remains valid and can be followed even when data repositories change.

With regard to Figure 1, the preceding explanations are related to the initialisation transaction 6e and the transfer transaction 6a invoked at the first data repository 11, the transfer message transaction 6c and the receipt transaction 6b invoked at the second data repository 12, and the receipt acknowledgement transaction 6d invoked again at the first data repository 1 l . When the item 5 is sent from the second transfer partner 22 to a third transfer partner 23, a further transfer transaction 6a is invoked by the client 2 at the second data repository 12, with further first transfer data (42), causing a further transfer message transaction 6c with further second transfer data (52) at the third data repository 13 associated with the third transfer partner 23. Upon receipt, the receipt transaction 6b with further receipt data (63) is invoked by the third client 3 at the third data repository 13, and the receipt acknowledgement transaction 6d with further receipt acknowledgement data (82) invoked at the second data repository 12.

When an item 5 exits the supply chain (or the part of the supply chain subject to tracking), either by being delivered to an end user, being destroyed or lost, a corresponding check-out transaction 6f is invoked by the transfer partner 21, 22, 23 last in possession of the item 5. The check-out transaction 6f provides the corresponding data repository 13 with an exit data set 64 comprising the unique identifier of the transferred entity UIN, 641 and additional exit data xD, 642, both subsequently stored by the data repository 13. Depending on the nature of the goods being tracked, the exit data may specify the type of exit (loss etc.).

In a further preferred embodiment of the invention, the data repositories 11, 11', 12, 12', 13, 13' are configured
- to associate the further information ExtD, 513, 523 with the transferred entity 5 by means of an **extended data set** EDS comprising the unique identifier of the transferred entity UIN and the associated further information ExtD,
- to establish such an extended data set EDS when processing a transfer message transaction 6c called from another data repository 11, 11', 12, 12', 13, 13',
- to provide the further information ExtD associated with the unique identifier of the transferred entity UIN to another data repository 11, 11', 12, 12', 13, 13' when invoking a transfer message transaction 6c at this other data repository 11, 11', 12, 12', 13, 13'.
Such an **extended data set** EDS can be initialised, in a data repository 11, 11' associated with a manufacturer, by an initialisation transaction 6e as described earlier. The above is of course only one way in which the further information ExtD may be associated, in each data repository 11, 11', 12, 12', 13, 13' with the UIN. Alternatively, the further information may be copied and stored separately as part of the sender data sets SDS and recipient data sets RDS.

In a preferred embodiment of the invention,
- each client process is associated with one of a plurality of predefined roles, and
- each data repository 11, 11', 12, 12', 13, 13' is accessible by means of transactions 6a-6e only to a predefined subset of all the client processes 1, 1', 2, 2', 3, 3', according to the role of said client processes 1, 1', 2, 2', 3, 3', and not being accessible to other client processes 1, 1', 2, 2', 3, 3'.
This allows to control access in to the data repositories 11, 11', 12, 12', 13, 13' more flexibly. For example, a role may be "subsidiary of retail chain XY". Different clients running on computers located at distinct subsidiaries all are assigned this same role. In consequence, access to the retail chains data repository is granted to all these clients, but not to others. This role mechanism serves mainly for controlling access, the clients keep their separate identities as transfer partners 21, 22, 23, since the location where a physical transfer sending or reception is recorded is of course relevant. In other cases, a role may correspond only a single transfer partner and therefore provide no benefit.

In order to extract tracking information from the distributed set of data repositories 11, 11', 12, 12', 13, 13', an organisational entity must first obtain, from each owner of the data repositories involved, permission to access at least part of the repositories' content. Once access is granted, e.g. by a certificate-based authentication procedure, a data collecting process 4 authorised in this manner issues data collection queries 6e to the repositories, specifying a unique identifier of a transferred entity UIN, a sender data set SDS and/or a recipient data set RDS comprising said unique identifier UIN. From the SDS and/or the SDS, the data collecting process is given the data repository identifier SDR_ID, RDR_ID of a sending and/or a receiving data repository, and optionally at least part of the further information, indicating e.g. the time of the corresponding transfer. The collecting process recursively repeats the query 6a at the data repositories identified in this manner, until the manufacturer's or the end distributor's data repository is reached. As a result, the collecting process has established a record of the complete trajectory of the item 5 with the given UIN through the distribution system of the transfer partners 21, 22, 23.

Since this process uses the data repository identifiers SDR_ID, RDR_ID to interlink the elements of the trajectory, the trajectory can be established even after a data repository is retired i.e., it remains operational, but without recording any transfers anymore or a transfer partner name changes.

While the invention has been described in present preferred embodiments of the invention, it is distinctly understood that the invention is not limited thereto, but may be otherwise variously embodied and practised within the scope of the claims.

## Claims

1. Transactional database system, comprising
■ a plurality of logically separated, computer based **data repositories** (11, 11', 12, 12', 13, 13'),
■ the data repositories (11, 11', 12, 12', 13, 13') being accessible by a plurality of **client processes** (1, 1', 2, 2', 3, 3'),
■ the data repositories (11, 11', 12, 12', 13, 13') being configured to provide, to the client processes (1, 1', 2, 2', 3, 3') and to other data repositories (11, 11', 12, 12', 13, 13'), **transactions** (6a, 6b, 6c)
○ for storing, in the data repository (11, 11', 12, 12', 13, 13'), **data** (41, 42, 62) representing a **physical transfer** and provided by a client process (1, 1', 2, 2', 3, 3'), or
○ for providing, by the data repository (11, 11', 12, 12', 13, 13'), previously stored data (41, 42, 62) representing a physical transfer to a data collecting process (4),
■ each data repository (11, 11', 12, 12', 13, 13'), by means of an access control mechanism, being accessible through transactions (6a, 6b) only to a predefined **subset of the clients processes** (1, 1', 2, 2', 3, 3'), and not to other client processes;
■ each data repository (11, 11', 12, 12', 13, 13'), by means of an access control mechanism, being accessible through further transactions (6c, 6d) to at least one of the other data repositories (11, 11', 12, 12', 13, 13'),
■ the data repositories (11, 11', 12, 12', 13, 13') being configured, when executing a **transfer transaction** (6a) called by a client process (1, 1') for processing **first transfer data** (41) provided by the client process (1),
wherein the first transfer data (41) comprises
○ a **unique identifier of a transferred entity** (UIN, 411),
○ a **receiving transfer partner identifier** (R_ID, 412) uniquely identifying a **transfer partner** (22) receiving the transferred entity (5) and wherein this processing comprises:
○ determining, from the receiving transfer partner identifier (R_ID, 412), a **second data repository identifier** (RDR_ID) associated with the transfer partner (22),
○ storing, in a **persistent storage unit** (14) of the first data repository (11), a **sender data set (SDS)** comprising
■ the unique identifier of the transferred entity (UIN),
■ the receiving transfer partner identifier (R_ID) and
■ the second data repository identifier (RDR_ID),
○ communicating with the second data repository (12) by means of the second data repository identifier and initiating, at the second data repository (12), a **transfer message transaction** (6c) for processing in the second data repository **second transfer data** (51) comprising
■ said unique identifier of the transferred entity (UIN, 511),
■ a **sending transfer partner identifier** (S_ID, 512) uniquely identifying a transfer partner (21) sending the transferred entity (5), and
■ optionally, **further information** (ExtD, 513) associated with the transferred entity (5) identified by the unique identifier (UIN, 511) of the first transfer data (41) and previously stored in the first data repository (11).

2. The transactional database system of claim 1, wherein the data repositories (11, 11', 12, 12', 13, 13') are configured, when processing a transfer message transaction (6c) called by a sending data repository (11, 11', 12, 12', 13, 13'), to store, in the persistent storage unit (14), a **recipient data set** (RDS) comprising
• the unique identifier of the transferred entity (UIN),
• the sending transfer partner identifier (S_ID), and
• a sending data repository identifier (SDR_ID) associated with the sending transfer partner,
and optionally, to store the further information (ExtD) associated with the unique identifier of the transferred entity (UIN).

3. The transactional database system of claim 1 or claim 2, wherein the data repositories (11, 11', 12, 12', 13, 13') are configured to process a **receipt transaction** (6b) called by a client process (2, 2') for storing **receipt data** (62) provided by the client process (2, 2'), wherein the receipt data (62) comprises
■ a **unique identifier of a received entity (UIN, 621),**
and wherein this processing comprises:
■ determining, from the unique identifier of the received entity (UIN, 621) and from recipient data sets (RDS) stored in the data repository (12), one recipient data set (RDS) whose unique identifier (UIN) of the transferred entity matches that (UIN, 621) of the receipt data (62),
■ registering, in said one recipient data set (RDS), the transferred entity (5) as having been received (ACK), and
■ optionally, and only if the above match is successful, invoking at the sending data repository (11) identified by the sending data repository identifier (SDR_ID) stored in the matching recipient data set (RDS) a **receipt acknowledgement transaction** (6d) for processing **receipt acknowledgement data** (81) comprising
o the unique identifier of the transferred entity (UIN, 811),
o the receiving transfer partner identifier (R_ID, 812) uniquely identifying the transfer partner (22) having received the transferred entity (5).

4. The transactional database system of claim 3, wherein the data repositories (11, 11', 12, 12', 13, 13') are configured, when processing a **receipt acknowledgement transaction** (6d), to
■ determine the sender data set (SDS) whose unique identifier of the transferred entity (UIN) matches the unique identifier of the transferred entity (UIN, 811) specified by the receipt acknowledgement transaction (6d),
■ mark, in the sender data set (SDS), the transferred entity as having been received (ACK).
■ optionally, check whether the second data repository identifier (RDR_ID) stored in this sender data set (SDS) is identical to the receiving transfer partner identifier (R_ID, 812) specified in the receipt acknowledgement transaction (6d), and
o if this check succeeds, to mark, in the sender data set (SDS), the transferred entity as having been received (ACK); or
o if this check does not succeed, to mark, in the sender data set (SDS), the transferred entity as not having been received (ACK), and to signal an error.

5. The transactional database system of one of claims 2 to 4, wherein the data repositories (11, 11', 12, 12', 13, 13') are configured
■ to associate the further information (ExtD, 513, 523) with the transferred entity (5) by means of an **extended data set** (EDS) comprising the unique identifier of the transferred entity (UIN) and the associated further information (ExtD),
■ to establish such an extended data set (EDS) when processing a transfer message transaction (6c) called from another data repository (11, 11', 12, 12', 13, 13'),
■ to provide the further information (ExtD) associated with the unique identifier of the transferred entity (UIN) to another data repository (11, 11', 12, 12', 13, 13') when invoking a transfer message transaction (6c) at this other data repository (11, 11', 12, 12', 13, 13').

6. The transactional database system of one of the preceding claims, wherein at least one of the data repositories (11, 11') is configured to execute initialisation transactions (6e) for processing initialisation data (71) comprising a unique identifier of an entity type (GTIN, 711) and further information (ExtD, 713) associated with said entity (5), wherein this processing comprises generating, from the unique identifier of an entity type (GTIN, 711), a unique identifier of an entity (UIN) and storing, in an **extended data set** (EDS) in the persistent storage unit (14) of the at least one data repository (11, 11')
■ said unique identifier of the transferred entity (UIN), and
■ further information (ExtD).

7. The transactional database system of one of the preceding claims, wherein
■ each client process is associated with one of a plurality of predefined **roles,** and
■ each data repository (11, 11', 12, 12', 13, 13') is accessible by means of transactions (6a-6e) only to a predefined **subset of all the client processes** (1, 1', 2, 2', 3, 3'), according to the role of said client processes (1, 1', 2, 2', 3, 3'), and not being accessible to other client processes (1, 1', 2, 2', 3, 3').

8. The transactional database system of one of the preceding claims, wherein the data repositories (11, 11', 12, 12', 13, 13') are configured to determine, from the receiving transfer partner identifier (412), the second data repository identifier associated with the transfer partner (22), by matching the receiving transfer partner identifier (412) with an entry in a database (8) associating transfer partner identifiers with data repository identifiers.

9. The transactional database system of one of the preceding claims, wherein the data repositories (11, 11', 12, 12', 13, 13') are configured to associate a group of transferred entities (UIN1, UIN2, UIN3, ...) with a group identifier (GID) and to process transfer transactions (6a), receipt transactions (6b), transfer message transaction (6c) and optionally also receipt acknowledgement transaction (6d) in which a group of transferred entities (UIN1, UIN2, UIN3, ...) is identified by a group identifier (GID).

10. The transactional database system of claim 9, wherein the data repositories (11, 11', 12, 12', 13, 13') are configured to
■ transmit, by invoking a transfer message transaction (6c), a group identifier (GID) and a plurality of unique identifiers of transferred entities (UIN1, UIN2, UIN3, ...), with optionally associated further information (ExtD), associated with this group identifier (GID),
■ store, in the persistent storage unit (14), when processing a transfer message transaction (6c), the group identifier (GID) in association with the plurality of unique identifiers of transferred entities (DIN1, UIN2, UIN3, ...),
■ process, in a receipt transaction (6b), a group identifier (GID) instead of a unique identifier of a transferred entity, to retrieve the associated unique identifiers of transferred entities (UIN1, UIN2, UIN3, ...), to retrieve associated recipient data sets (RDS), to register, in these recipient data sets (RDS), the transferred entities (5) as having been received (ACK), and, optionally, to invoke at the sending data repository (11) a receipt acknowledgement transaction (6d) specifying the group identifier (GID) or the associated unique identifiers of transferred entities (UIN1, UIN2, UIN3, ...).

11. The transactional database system of one of the preceding claims, wherein the data repositories (11, 11', 12, 12', 13, 13') are configured to provide to an authorised data collecting process (4), in response to a **data collection query** (6e) specifying a unique identifier of a transferred entity (UIN), a sender data set (SDS) and/or a recipient data set (RDS) comprising said unique identifier (UIN).

12. A m**ethod** for operating a data processing system implementing a data repository (11, 11', 12, 12', 13, 13') in a transactional database system according to one of the preceding claims, comprising the processing of **transfer transactions** (6a), wherein a transfer transaction (6a) is called by a client process (1, 1') for processing **first transfer data** (41) provided by the client process (1), wherein the first transfer data (41) comprises
■ a **unique identifier of a transferred entity** (UIN, 411),
■ a **receiving transfer partner identifier** (R_ID, 412) uniquely identifying a **transfer partner** (22) receiving the transferred entity (5)
and wherein this processing comprises the steps of:
■ determining, from the receiving transfer partner identifier (R_ID, 412), a second data repository identifier associated with the transfer partner (22),
■ storing, in a persistent storage unit (14) of the first data repository (11), a sender data set (SDS) comprising
■ the unique identifier of the transferred entity (UIN),
■ the receiving transfer partner identifier (R_ID) and
■ the second or receiving data repository identifier (RDR_ID),
■ communicating with the second data repository (12) by means of the second data repository identifier and initiating, at the second data repository (12), a transfer message transaction (6c) for processing in the second data repository second transfer data (51) comprising
■ said unique identifier of the transferred entity (UIN, 511),
■ a **sending transfer partner identifier** (S_ID, 512) uniquely identifying a transfer partner (21) sending the transferred entity (5), and
■ optionally, **further information** (ExtD, 513) associated with the transferred entity (5) identified by the unique identifier (UIN, 511) of the first transfer data (41) and previously stored in the first data repository (11).

13. The method of claim 12, further comprising the processing of **receipt transactions** (6b), called by client processes (2, 2') for storing **receipt data** (62) provided by the client processes (2, 2'), wherein the receipt data (62) comprises
■ a **unique identifier of a received entity (UIN, 621)**,
and wherein this processing comprises:
■ determining, from the unique identifier of the received entity (UIN, 621) and from recipient data sets (RDS) stored in the data repository (12), one recipient data set (RDS) whose unique identifier (UIN) of the transferred entity matches that (UIN, 621) of the receipt data (62), and
■ registering, in said one recipient data set (RDS), the transferred entity (5) as having been received (ACK),
■ optionally, and only if the above match is successful, invoking at the sending data repository (11) identified by the sending data repository identifier (SDR_ID) stored in the matching recipient data set (RDS) a **receipt acknowledgement transaction** (6d) for processing **receipt acknowledgement data** (81) comprising
○ the unique identifier of the transferred entity (UIN, 811),
○ the receiving transfer partner identifier (R_ID, 812) uniquely identifying the transfer partner (22) having received the transferred entity (5).

14. The method of claim 12 or 13, further comprising the processing of a **transfer message transaction** (6c) called by a sending data repository (11, 11', 12, 12', 13, 13'), by storing, in the persistent storage unit (14), a **recipient data set** (RDS) comprising
• the unique identifier of the transferred entity (UIN),
• the sending transfer partner identifier (S_ID), and
• a sending data repository identifier (SDR_ID) associated with the sending transfer partner,
and optionally, to store the further information (ExtD) associated with the unique identifier of the transferred entity (UIN).

15. Method for extracting the path of a transferred entity (5) from a database system according to one of the claims 1 through 12, comprising the steps of,
■ obtaining a unique identifier of a transferred entity (UIN) and a data repository identifier (SDR_ID, RDR_ID) of a data repository storing at least one of a sender data set (SDS) and a recipient data set (RDS) comprising this unique identifier (UIN);
■ extracting from said sender data set (SDS) the receiving data repository identifier (SDR_ID), and/or from said recipient data set (RDS) the sending data repository identifier (SDR_ID),
■ recursively repeating the preceding step for the receiving and/or sending data repository, until no new sender or recipient data set is found.

16. A data repository (11, 11', 12, 12', 13, 13') implemented on a server computer (10) and programmed to execute the method according to at least one of claims 12 through 15.

17. A computer program storable on a computer readable medium and loadable into an internal memory of a digital computer, comprising computer program code means to make, when said computer program is loaded in the computer, the computer execute the method according to at least one of claims 12 through 15.
